# FASCICULE DE BREVET EUROPEEN

(11) **EP 3 795 972 B1**
(45) Date de publication et mention de la délivrance du brevet: **11.10.2023**
(21) Numéro de dépôt: 20192966.8
(22) Date de dépôt: 26.08.2020
(51) Int. Cl.: G01M 3/20

(54) **MODULE DE DÉTECTION DE FUITES ET PROCÉDÉ DE CONTRÔLE DE L'ÉTANCHÉITÉ D'UN OBJET À TESTER PAR GAZ TRACEUR**
LECKERKENNUNGSMODUL UND VERFAHREN ZUR KONTROLLE DER DICHTHEIT EINES OBJEKTS MIT TRACERGAS
LEAK DETECTION MODULE AND METHOD FOR TESTING THE AIRTIGHTNESS OF AN OBJECT TO BE TESTED USING A TRACER GAS

(30) Priorité: 20.09.2019 FR 1910417
(43) Date de publication de la demande: 24.03.2021
(73) Titulaire: Pfeiffer Vacuum, 74000 Annecy (FR)
(72) Inventeur: COULOMB, Julien, 74000 ANNECY (FR); UROS, Emmanuel, 74000 ANNECY (FR)
(74) Mandataire: Croonenbroek, Thomas Jakob

(56) Documents cités:
- EP-A1- 2 042 849
- US-B2- 8 915 122
- US-B2- 9 810 597

## Description

La présente invention concerne un module de détection de fuites pour le contrôle de l'étanchéité d'un objet à tester par gaz traceur. L'invention concerne également un procédé de contrôle de l'étanchéité d'un objet à tester par gaz traceur.

Une méthode connue pour contrôler l'étanchéité d'un objet consiste à réaliser un test dit « par reniflage » ou « en aspersion » de gaz traceur. Ces méthodes font appel à la détection du passage du gaz traceur à travers les éventuelles fuites de l'objet à tester. En mode reniflage, on recherche à l'aide d'un détecteur de fuites relié à une sonde de reniflage la présence éventuelle du gaz traceur autour d'un objet à tester rempli avec le gaz traceur généralement pressurisé. En mode aspersion, on asperge l'objet à tester de gaz traceur avec un pistolet d'aspersion, le volume intérieur de l'objet à tester étant relié à un détecteur de fuites.

La recherche de fuites est réalisée en déplaçant la sonde de reniflage ou le pistolet d'aspersion autour de l'objet à tester, notamment au niveau des zones susceptibles de présenter des faiblesses d'étanchéité, tel qu'autour des joints d'étanchéité. Une augmentation du signal de concentration en gaz traceur mesuré est révélatrice de la présence d'une fuite à l'endroit où est positionnée la sonde. Un tel module de détection de fuites est décrit dans le brevet EP2042849.

Pour obtenir une bonne sensibilité du détecteur, notamment pour détecter de faibles taux de fuites, on réalise une mesure du bruit de fond environnant que l'on soustraie à la mesure.

Cela n'est cependant pas suffisant car on constate parfois des instabilités sur le signal du bruit de fond. Des variations de pression du refoulement de la pompe turbomoléculaire du détecteur peuvent survenir et générer des variations du signal de mesure. Ces variations de pression peuvent se présenter sous la forme de sauts relativement importants ou de variations plus ou moins périodiques qui ne semblent pas être liées à la pression de gaz traceur, et qui peuvent perturber le signal mesuré. Ces variations aléatoires de pression peuvent être faussement interprétées comme des variations de la concentration en gaz traceur mesurée et peuvent donc directement impacter le signal de détection du détecteur de fuites, ce qui peut dégrader les performances de mesure.

Il est possible d'atténuer ces variations de pression en abaissant la pression du refoulement de la pompe à vide turbomoléculaire par l'utilisation d'un dispositif de pompage primaire plus performant en termes de capacité de pompage. Cependant, augmenter la capacité de pompage primaire conduit à augmenter significativement le cout du détecteur de fuites.

Un but de la présente invention est donc de proposer un détecteur de fuites résolvant au moins en partie un inconvénient précité de l'état de la technique.

A cet effet, l'invention a pour objet un module de détection de fuites pour le contrôle de l'étanchéité d'un objet à tester par gaz traceur, comportant un détecteur de fuites comprenant :
- un dispositif de pompage comportant :
- une pompe à vide turbomoléculaire présentant une aspiration et un refoulement,
- une pompe à vide primaire dont une aspiration est raccordée au refoulement de la pompe à vide turbomoléculaire, et
- un analyseur de gaz raccordé à la pompe à vide turbomoléculaire,
caractérisé en ce qu'il comporte en outre une unité de traitement du signal reliée à l'analyseur de gaz, configurée pour corriger le signal de sortie brut de l'analyseur de gaz au moyen d'un signal de sortie représentatif des variations de la pression d'aspiration de la pompe à vide primaire.

Il est ainsi possible de compenser les variations ou sauts de pression qui ne sont pas dus à des variations de la concentration en gaz traceur. Les inventeurs ont en effet constaté une très forte corrélation entre le signal de sortie brut de l'analyseur de gaz, susceptible de donner la concentration en gaz traceur et la pression d'aspiration de la pompe à vide primaire. En soustrayant la composante liée aux variations de la pression d'aspiration de la pompe à vide primaire, on peut corriger le signal de sortie brut de l'analyseur de gaz pour le rendre indépendant de ces instabilités aléatoires.

Le module de détection de fuites peut comporter une ou plusieurs des caractéristiques qui sont décrites ci-après, prises seules ou en combinaison.

Le module de détection de fuites peut comporter un capteur de pression produisant le signal de sortie représentatif des variations de la pression d'aspiration de la pompe à vide primaire. Le capteur de pression est interposé entre l'aspiration de la pompe à vide turbomoléculaire et un refoulement de la pompe à vide primaire. Le capteur de pression peut être agencé au niveau d'un étage moléculaire Holweck ou au niveau d'un étage turbomoléculaire de la pompe à vide turbomoléculaire. Le capteur de pression peut être agencé au niveau d'un étage ou d'un inter-étage de la pompe à vide primaire. Le capteur de pression peut être agencé sur une canalisation reliant le refoulement de la pompe à vide turbomoléculaire à l'aspiration de la pompe à vide primaire.

Le signal de sortie représentatif des variations de la pression d'aspiration de la pompe à vide primaire peut être un signal de courant et/ou de puissance d'alimentation et/ou de la fréquence de rotation de la pompe à vide primaire.

La pompe à vide primaire peut être une pompe à membranes.

L'unité de traitement du signal peut être configurée pour corriger le signal de sortie brut de l'analyseur de gaz uniquement lorsque le signal de sortie brut de l'analyseur de gaz est inférieur à un seuil de flux de gaz. En effet, lorsque le signal de sortie brut est très supérieur au bruit de fond, la correction devient inutile car les variations parasites de pression deviennent négligeables.

L'unité de traitement du signal peut être configurée pour générer un message de maintenance lorsque les variations du signal de sortie représentatif des variations de la pression d'aspiration de la pompe à vide primaire dépassent un seuil de variation.

L'invention a aussi pour objet un procédé de contrôle de l'étanchéité d'un objet à tester par gaz traceur au moyen d'un module de détection de fuites tel que décrit précédemment, caractérisé en ce qu'on corrige le signal de sortie brut de l'analyseur de gaz au moyen d'un signal de sortie représentatif des variations de la pression d'aspiration de la pompe à vide primaire.

Le procédé de contrôle de l'étanchéité d'un objet à tester par gaz traceur peut comporter une ou plusieurs des caractéristiques qui sont décrites ci-après, prises seules ou en combinaison.

Le signal de sortie représentatif des variations de la pression d'aspiration de la pompe à vide primaire peut être celui d'un capteur de pression notamment interposé entre l'aspiration de la pompe à vide turbomoléculaire et un refoulement de la pompe à vide primaire.

Le signal de sortie représentatif des variations de la pression d'aspiration de la pompe à vide primaire peut être un signal de courant et/ou de puissance d'alimentation et/ou de la fréquence de rotation de la pompe à vide primaire.

On peut corriger le signal de sortie brut de l'analyseur de gaz uniquement lorsque le signal de sortie brut de l'analyseur de gaz est inférieur à un seuil de flux de gaz.

Un message de maintenance peut être généré lorsque les variations du signal de sortie représentatif des variations de la pression d'aspiration de la pompe à vide primaire dépassent un seuil de variation.

D'autres caractéristiques et avantages de l'invention ressortiront de la description suivante, donnée à titre d'exemple, sans caractère limitatif, en regard des dessins annexés sur lesquels:
**[****Fig. 1****]** La Figure 1 est une représentation schématique d'un exemple de module de détection de fuites 1.
**[****Fig.2****]** La Figure 2 est un graphique montrant le signal de sortie brut de l'analyseur de gaz (courbe A) en mbar.l/s sur l'ordonnée de gauche, la pression d'aspiration de la pompe à vide primaire (courbe B) en mbar sur l'ordonnée de droite et le signal de détection corrigé (courbe C) en mbar.l/s sur l'ordonnée de gauche en fonction du temps (en s) en abscisse.

Sur ces figures, les éléments identiques portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

On définit par « objet à tester », un objet ou une installation dont on souhaite contrôler l'étanchéité.

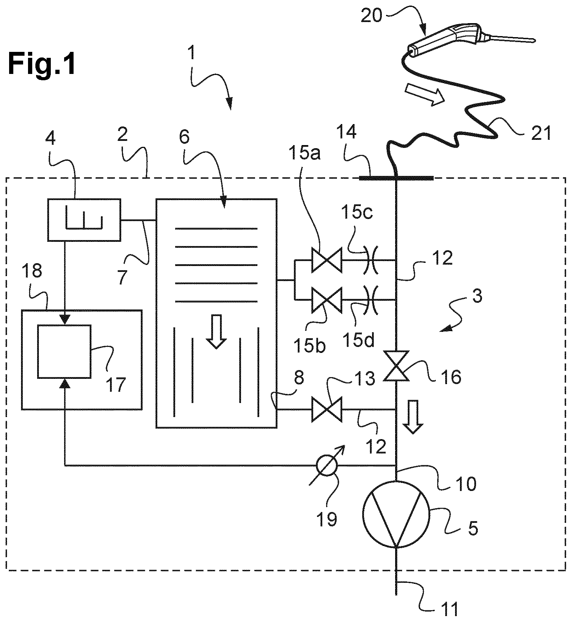

La figure 1 montre un exemple d'un module de détection de fuites 1 pour le contrôle de l'étanchéité d'un objet à tester par gaz traceur.

On utilise généralement l'hélium ou l'hydrogène comme gaz traceur car ces gaz traversent les petites fuites plus aisément que les autres gaz, du fait de la petite taille de leur molécule et de leur grande vitesse de déplacement.

Le module de détection de fuites 1 comporte un détecteur de fuites 2 comprenant un dispositif de pompage 3 et un analyseur de gaz 4.

Le dispositif de pompage 3 comporte une pompe à vide turbomoléculaire 6 et une pompe à vide primaire 5. La pompe à vide turbomoléculaire 6 présente une aspiration 7 et un refoulement 8. La pompe à vide primaire 5 présente également une aspiration 10 et un refoulement 11. L'aspiration 10 de la pompe à vide primaire 5 est raccordée au refoulement 8 de la pompe à vide turbomoléculaire 6. La pompe à vide primaire 5 est par exemple une pompe à membrane telle qu'une pompe à membrane multiétagée.

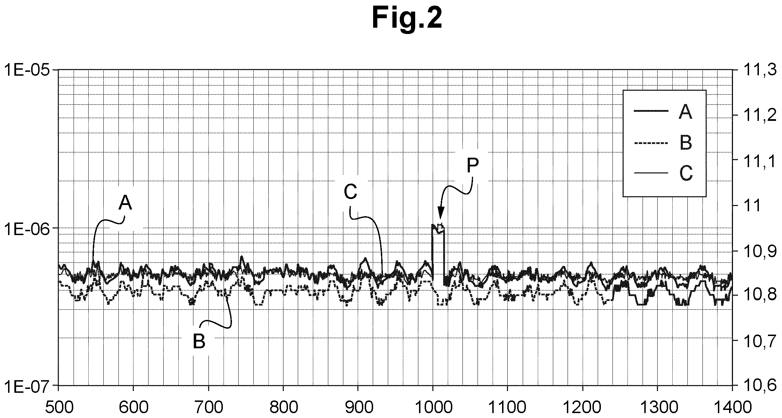

L'analyseur de gaz 4 est raccordé à la pompe à vide turbomoléculaire 6, par exemple à son aspiration 7. Il comporte par exemple un spectromètre de masse. L'analyseur de gaz 4 délivre un signal de sortie brut qui est représentatif de la concentration en gaz traceur (courbe A sur la Figure 2).

Le refoulement 8 de la pompe à vide turbomoléculaire 6 est par exemple raccordé à l'aspiration 10 de la pompe à vide primaire 5 par une canalisation 12 munie d'une première vanne d'isolation 13.

L'entrée de détection 14 du détecteur de fuites 2 communique avec une entrée de la pompe à vide turbomoléculaire, par exemple au niveau d'un étage de la pompe à vide turbomoléculaire 6, via au moins une vanne de prélèvement 15a, 15b.

Le dispositif de pompage 3 comporte par exemple au moins deux vannes de prélèvement 15a, 15b raccordées sur une même entrée de la pompe à vide turbomoléculaire 6, chacune associée à un réducteur de flux 15c, 15d respectif. Les réducteurs de flux 15c, 15d permettent de contrôler le débit de gaz passant dans la pompe à vide turbomoléculaire 6. Ils sont distincts de manière à pouvoir adapter le flux de prélèvement au niveau du taux de fuites en sélectionnant l'ouverture de l'une des deux vannes de prélèvement 15a, 15b.

La au moins une vanne de prélèvement 15a, 15b est raccordée sur une dérivation d'une canalisation de la ligne de vide agencée entre l'entrée de détection 14 et une deuxième vanne d'isolation 16. La deuxième vanne d'isolation 16 est raccordée à la première vanne d'isolation 13 et à l'aspiration 10 de la pompe à vide primaire 5.

Le module de détection de fuites 1 comporte en outre une unité de traitement du signal 17 reliée à l'analyseur de gaz 4.

L'unité de traitement du signal 17 est par exemple un programme d'ordinateur d'une unité de contrôle 18 du détecteur de fuites 2. L'unité de contrôle 18 comporte un ou plusieurs contrôleur(s) ou processeur(s) et mémoire, configurés notamment pour lancer un cycle de mesure ou une mesure de bruit de fond du détecteur de fuites 2.

L'unité de traitement du signal 17 est configurée pour corriger le signal de sortie brut de l'analyseur de gaz 4 au moyen d'un signal de sortie représentatif des variations de la pression d'aspiration de la pompe à vide primaire 5.

Il est ainsi possible de compenser les variations ou sauts de pression qui ne sont pas dus à des variations de la concentration en gaz traceur. Les inventeurs ont en effet constaté une très forte corrélation entre le signal de sortie brut de l'analyseur de gaz 4, susceptible de donner la concentration en gaz traceur et la pression d'aspiration de la pompe à vide primaire 5. En soustrayant la composante liée aux variations de la pression d'aspiration de la pompe à vide primaire 5, on peut corriger le signal de sortie brut de l'analyseur de gaz 4 pour le rendre indépendant de ces instabilités aléatoires.

On peut en outre prévoir de corriger le signal de sortie brut de l'analyseur de gaz 4 uniquement lorsque le signal de sortie brut de l'analyseur de gaz 4 est inférieur à un seuil de flux de gaz. Le seuil de flux de gaz est par exemple égal à cent fois le signal de bruit de fond, tel que de 5.10⁻⁵ mbars.l/s. Le signal de sortie brut est alors corrigé uniquement pour des valeurs proches du bruit de fond pour lesquelles les variations parasites de pression d'aspiration de la pompe à vide primaire 5 sont visibles. Lorsque le signal de sortie brut est très supérieur au bruit de fond, la correction devient inutile car les variations parasites de pression deviennent négligeables.

L'unité de traitement du signal 17 peut être configurée pour générer un message de maintenance lorsque les variations du signal de sortie représentatif des variations de la pression d'aspiration de la pompe à vide primaire 5 dépassent un seuil de variation. On constate en effet une accentuation des variations de pression avec le vieillissement de la pompe à vide primaire 5. L'augmentation des amplitudes de variation du signal de sortie au-delà du seuil de variation peut permettre d'indiquer un défaut de fonctionnement du détecteur de fuites 2 ou la nécessité de réaliser une maintenance de la pompe à vide primaire 5.

Selon un mode de réalisation, le module de détection de fuites 1 comporte un capteur de pression 19 interposé entre l'aspiration 7 de la pompe à vide turbomoléculaire 6 et le refoulement 11 de la pompe à vide primaire 5. Le capteur de pression 19 est par exemple agencé sur la canalisation 12 reliant le refoulement 8 de la pompe à vide turbomoléculaire 6 à l'aspiration 10 de la pompe à vide primaire 5, par exemple au niveau de l'aspiration 10 de la pompe à vide primaire 5.

Le capteur de pression 19 est relié à l'unité de traitement du signal 17 pour délivrer un signal de sortie correspondant à la pression d'aspiration 10 de la pompe à vide primaire 5 (courbe B sur la Figure 2).

Le capteur de pression 19 peut être de tout type. C'est par exemple une jauge de Pirani ou un capteur de pression piézo-résistif ou un capteur de pression capacitif.

Etant donné que seules les variations de la pression d'aspiration de la pompe à vide primaire 5 sont nécessaires pour corriger le signal de sortie brut de l'analyseur de gaz 4, le capteur de pression 19 peut présenter une plage de mesure très réduite, par exemple de l'ordre de 1 ou 2 mbars.

Les Figures 1 et 2 montrent ainsi un exemple d'utilisation du module de détection de fuites 1 en mode dit de reniflage.

En mode reniflage, le module de détection de fuites 1 comporte en outre une sonde de reniflage 20 reliée à l'entrée de détection 14 du détecteur de fuites 2 par un tuyau flexible 21 pour aspirer les gaz environnant l'objet à tester rempli de gaz traceur. En utilisation, l'utilisateur déplace l'extrémité de la sonde de reniflage 20 à proximité de l'objet à tester. Une partie des gaz aspirés par le dispositif de pompage 3 est analysée par l'analyseur de gaz 4 qui délivre un signal de sortie brut.

On voit sur la Figure 2 que le signal de sortie brut de l'analyseur de gaz 4 (courbe A) présente parfois des instabilités en l'absence de fuites de l'ordre de 10% à 20% du signal. Ce signal parait difficilement exploitable pour des concentrations en gaz traceur inférieures à 6.10⁻⁷mbar.l/s.

L'unité de traitement du signal 17 récupère ce signal de sortie brut de l'analyseur de gaz 4 (courbe A) ainsi que le signal de sortie du capteur de pression 19 (courbe B) et soustrait le signal de sortie du capteur de pression 19 auquel on applique un facteur d'échelle, au signal de sortie brut de l'analyseur de gaz 4 pour obtenir le signal de détection corrigé (courbe C). Le facteur d'échelle permet de soustraire un signal de pression (ici en mbar) au signal de l'analyseur de gaz (ici en mbar.l/s) pour compenser le fait que ces deux grandeurs physiques ne sont pas dans la même unité.

Les variations d'amplitude du signal de détection corrigé (courbe C) sont plus faibles que celles du signal de sortie brut de l'analyseur de gaz 4 (courbe A). En effet, les variations de pression sur le signal de détection corrigé en l'absence de fuites sont réduites à quelques pourcents.

En outre, le signal de détection corrigé (courbe C) est beaucoup plus stable dans le temps. Les perturbations restantes présentent une périodicité plus faible. Le signal de détection corrigé est de type « bruit blanc », ce qui permet son lissage par filtrage classique.

En cas de présence d'une fuite sur l'objet à tester, un pic P lié à l'augmentation de la concentration en gaz traceur apparait dans le signal de détection, se détachant du signal de bruit de fond. Comme ce pic n'apparait pas sur le signal de sortie du capteur de pression 19 (courbe B), la correction du signal ne perturbe pas sa détection.

La sensibilité de mesure, notamment pour les concentrations faibles de gaz traceur, peut donc être améliorée.

La détection peut donc être plus rapide, plus fiable et plus sensible.

Le module de détection de fuites 1 peut également être utilisé en mode aspersion. L'entrée de détection 14 est alors raccordée au volume intérieur de l'objet à tester qui est aspergé de gaz traceur.

Ce mode de réalisation utilisant un capteur de pression 19 présente l'avantage d'être particulièrement précis et sensible puisqu'on utilise directement le signal de pression d'aspiration 10 de la pompe à vide primaire 5 pour corriger le signal de sortie brut de l'analyseur de gaz 4.

Le capteur de pression 19 peut en outre être agencé à d'autres emplacements. Par exemple, le capteur de pression 19 peut être agencé au refoulement 8 ou au niveau de l'étage moléculaire Holweck ou au niveau d'un étage turbomoléculaire de la pompe à vide turbomoléculaire 6, par exemple sur une canalisation munie d'une vanne de prélèvement 15a, 15b.

Selon un autre exemple, le capteur de pression 19 est agencé au niveau d'un étage ou d'un inter-étage de la pompe à vide primaire 5.

Selon un autre exemple de réalisation, le signal de sortie représentatif des variations de la pression d'aspiration de la pompe à vide primaire 5 est un signal de courant et/ou de puissance d'alimentation et/ou de la fréquence de rotation de la pompe à vide primaire 5.

Pour cela, l'unité de traitement du signal 17 est par exemple reliée à une sortie d'un variateur de vitesse d'un moteur de la pompe à vide primaire 5.

Ce mode de réalisation présente l'avantage de ne pas nécessiter l'ajout de capteurs sur la ligne de vide.

## Revendications

1. Module de détection de fuites (1) pour le contrôle de l'étanchéité d'un objet à tester par gaz traceur, comportant un détecteur de fuites (2) comprenant :
- un dispositif de pompage (3) comportant :
- une pompe à vide turbomoléculaire (6) présentant une aspiration (7) et un refoulement (8),
- une pompe à vide primaire (5) dont une aspiration (10) est raccordée au refoulement (8) de la pompe à vide turbomoléculaire (6), et
- un analyseur de gaz (4) raccordé à la pompe à vide turbomoléculaire (6), **caractérisé en ce qu'**il comporte en outre une unité de traitement du signal (17) reliée à l'analyseur de gaz (4), configurée pour corriger le signal de sortie brut de l'analyseur de gaz (4) au moyen d'un signal de sortie représentatif des variations de la pression d'aspiration de la pompe à vide primaire (5).

2. Module de détection de fuites (1) selon la revendication précédente, **caractérisé en ce qu'**il comporte un capteur de pression (19) produisant le signal de sortie représentatif des variations de la pression d'aspiration de la pompe à vide primaire (5).

3. Module de détection de fuites (1) selon la revendication 2, **caractérisé en ce que** le capteur de pression (19) est agencé au niveau d'un étage moléculaire Holweck ou au niveau d'un étage turbomoléculaire de la pompe à vide turbomoléculaire (6).

4. Module de détection de fuites (1) selon la revendication 2, **caractérisé en ce que** le capteur de pression (19) est agencé au niveau d'un étage ou d'un inter-étage de la pompe à vide primaire (5).

5. Module de détection de fuites (1) selon la revendication 2, **caractérisé en ce que** le capteur de pression (19) est agencé sur une canalisation (12) reliant le refoulement (8) de la pompe à vide turbomoléculaire (6) à l'aspiration (10) de la pompe à vide primaire (5).

6. Module de détection de fuites (1) selon la revendication 1, **caractérisé en ce que** le signal de sortie représentatif des variations de la pression d'aspiration de la pompe à vide primaire (5) est un signal de courant et/ou de puissance d'alimentation et/ou de la fréquence de rotation de la pompe à vide primaire (5).

7. Module de détection de fuites (1) selon l'une des revendications précédentes, **caractérisé en ce que** la pompe à vide primaire (5) est une pompe à membranes.

8. Module de détection de fuites (1) selon l'une des revendications précédentes, **caractérisé en ce que** l'unité de traitement du signal (17) est configurée pour corriger le signal de sortie brut de l'analyseur de gaz (4) uniquement lorsque le signal de sortie brut de l'analyseur de gaz (4) est inférieur à un seuil de flux de gaz.

9. Procédé de contrôle de l'étanchéité d'un objet à tester (A) par gaz traceur au moyen d'un module de détection de fuites (1) selon l'une des revendications précédentes, **caractérisé en ce qu'**on corrige le signal de sortie brut de l'analyseur de gaz (4) au moyen d'un signal de sortie représentatif des variations de la pression d'aspiration de la pompe à vide primaire (5).

10. Procédé de contrôle de l'étanchéité selon la revendication précédente, **caractérisé en ce que** le signal de sortie représentatif des variations de la pression d'aspiration de la pompe à vide primaire (5) est celui d'un capteur de pression (19) interposé entre l'aspiration (7) de la pompe à vide turbomoléculaire (6) et un refoulement (11) de la pompe à vide primaire (5).

11. Procédé de contrôle de l'étanchéité selon la revendication 9, **caractérisé en ce que** le signal de sortie représentatif des variations de la pression d'aspiration de la pompe à vide primaire (5) est un signal de courant et/ou de puissance d'alimentation et/ou de la fréquence de rotation de la pompe à vide primaire (5).

12. Procédé de contrôle de l'étanchéité selon l'une des revendications 9 à 11, **caractérisé en ce qu'**on corrige le signal de sortie brut de l'analyseur de gaz (4) uniquement lorsque le signal de sortie brut de l'analyseur de gaz (4) est inférieur à un seuil de flux de gaz.

13. Procédé de contrôle de l'étanchéité selon l'une des revendications 9 à 12, **caractérisé en ce qu'**un message de maintenance est généré lorsque les variations du signal de sortie représentatif des variations de la pression d'aspiration de la pompe à vide primaire (5) dépassent un seuil de variation.

## Patentansprüche

1. Leckerkennungsmodul (1) für die Kontrolle der Dichtheit eines Testobjekts mit Tracergas, umfassend einen Leckdetektor (2), der Folgendes beinhaltet:
- eine Pumpvorrichtung (3), die Folgendes umfasst:
- eine Turbomolekularvakuumpumpe (6), die eine Saugseite (7) und eine Druckseite (8) aufweist,
- eine Vorvakuumpumpe (5), von der eine Saugseite (10) an die Druckseite (8) der Turbomolekularvakuumpumpe (6) angeschlossen ist,
- einen Gasanalysator (4), der an die Turbomolekularvakuumpumpe (6) angeschlossen ist,
**dadurch gekennzeichnet, dass** er ferner eine Signalverarbeitungseinheit (17) umfasst, die mit dem Gasanalysator (4) verbunden ist und dazu konfiguriert ist, das rohe Ausgangssignal des Gasanalysators (4) mittels eines Ausgangssignals, das für die Schwankungen des Saugdrucks der Vorvakuumpumpe (5) repräsentativ ist, zu korrigieren.

2. Leckerkennungsmodul (1) nach dem vorhergehenden Anspruch, **dadurch gekennzeichnet, dass** es einen Drucksensor (19) umfasst, der das Ausgangssignal, das für die Schwankungen des Saugdrucks der Vorvakuumpumpe (5) repräsentativ ist, erzeugt.

3. Leckerkennungsmodul (1) nach Anspruch 2, **dadurch gekennzeichnet, dass** der Drucksensor (19) im Bereich einer Holweck-Molekularstufe oder im Bereich einer Turbomolekularstufe der Turbomolekularvakuumpumpe (6) angeordnet ist.

4. Leckerkennungsmodul (1) nach Anspruch 2, **dadurch gekennzeichnet, dass** der Drucksensor (19) im Bereich einer Stufe oder einer Zwischenstufe der Vorvakuumpumpe (5) angeordnet ist.

5. Leckerkennungsmodul (1) nach Anspruch 2, **dadurch gekennzeichnet, dass** der Drucksensor (19) in einer Rohrleitung (12) angeordnet ist, die die Druckseite (8) der Turbomolekularvakuumpumpe (6) mit der Saugseite (10) der Vorvakuumpumpe (5) verbindet.

6. Leckerkennungsmodul (1) nach Anspruch 1, **dadurch gekennzeichnet, dass** das Ausgangssignal, das für die Schwankungen des Saugdrucks der Vorvakuumpumpe (5) repräsentativ ist, ein Signal zugeführten Stroms und/oder zugeführter Leistung und/oder der Drehzahl der Vorvakuumpumpe (5) ist.

7. Leckerkennungsmodul (1) nach einem der vorhergehenden Ansprüche, **dadurch gekennzeichnet, dass** die Vorvakuumpumpe (5) eine Membranpumpe ist.

8. Leckerkennungsmodul (1) nach einem der vorhergehenden Ansprüche, **dadurch gekennzeichnet, dass** die Signalverarbeitungseinheit (17) dazu konfiguriert ist, das rohe Ausgangssignal des Gasanalysators (4) nur dann zu korrigieren, wenn das rohe Ausgangssignal des Gasanalysators (4) kleiner als ein Gasflussschwellenwert ist.

9. Verfahren zur Kontrolle der Dichtheit eines Testobjekts (A) mit Tracergas mittels eines Leckerkennungsmoduls (1) nach einem der vorhergehenden Ansprüche, **dadurch gekennzeichnet, dass** das rohe Ausgangssignal des Gasanalysators (4) mittels eines Ausgangssignals, das für die Schwankungen des Saugdrucks der Vorvakuumpumpe (5) repräsentativ ist, korrigiert wird.

10. Verfahren zur Kontrolle der Dichtheit nach dem vorhergehenden Anspruch, **dadurch gekennzeichnet, dass** das Ausgangssignal, das für die Schwankungen des Saugdrucks der Vorvakuumpumpe (5) repräsentativ ist, jenes eines Drucksensors (19) ist, der zwischen die Saugseite (7) der Turbomolekularvakuumpumpe (6) und eine Druckseite (11) der Vorvakuumpumpe (5) eingefügt ist.

11. Verfahren zur Kontrolle der Dichtheit nach Anspruch 9, **dadurch gekennzeichnet, dass** das Ausgangssignal, das für die Schwankungen des Saugdrucks der Vorvakuumpumpe (5) repräsentativ ist, ein Signal zugeführten Stroms und/oder zugeführter Leistung und/oder der Drehzahl der Vorvakuumpumpe (5) ist.

12. Verfahren zur Kontrolle der Dichtheit nach einem der Ansprüche 9 bis 11, **dadurch gekennzeichnet, dass** das rohe Ausgangssignal des Gasanalysators (4) nur dann korrigiert wird, wenn das rohe Ausgangssignal des Gasanalysators (4) kleiner als ein Gasflussschwellenwert ist.

13. Verfahren zur Kontrolle der Dichtheit nach einem der Ansprüche 9 bis 12, **dadurch gekennzeichnet, dass** eine Wartungsmeldung generiert wird, wenn die Schwankungen des Ausgangssignals, das für die Schwankungen des Saugdrucks der Vorvakuumpumpe (5) repräsentativ ist, einen Schwankungsschwellenwert überschreiten.

## Claims

1. Leak detection module (1) for checking the leaktightness of an object to be tested using tracer gas, comprising a leak detector (2) comprising:
- a pumping device (3) comprising:
- a turbomolecular vacuum pump (6) having an intake (7) and a delivery (8),
- a rough-vacuum pump (5), an intake (10) of which is connected to the delivery (8) of the turbomolecular vacuum pump (6), and
- a gas analyser (4) connected to the turbomolecular vacuum pump (6),
**characterized in that** it further comprises a signal processing unit (17) connected to the gas analyser (4) and configured to correct the raw output signal of the gas analyser (4) by means of an output signal that is representative of the variations in the intake pressure of the rough-vacuum pump (5).

2. Leak detection module (1) according to the preceding claim, **characterized in that** it comprises a pressure sensor (19) producing the output signal that is representative of the variations in the intake pressure of the rough-vacuum pump (5).

3. Leak detection module (1) according to Claim 2, **characterized in that** the pressure sensor (19) is arranged at a Holweck molecular stage or at a turbomolecular stage of the turbomolecular vacuum pump (6) .

4. Leak detection module (1) according to Claim 2, **characterized in that** the pressure sensor (19) is arranged at a stage or an inter-stage of the rough-vacuum pump (5).

5. Leak detection module (1) according to Claim 2, **characterized in that** the pressure sensor (19) is arranged on a pipe (12) connecting the delivery (8) of the turbomolecular vacuum pump (6) to the intake (10) of the rough-vacuum pump (5).

6. Leak detection module (1) according to Claim 1, **characterized in that** the output signal that is representative of the variations in the intake pressure of the rough-vacuum pump (5) is a current and/or power supply and/or rotational frequency signal of the rough-vacuum pump (5).

7. Leak detection module (1) according to one of the preceding claims, **characterized in that** the rough-vacuum pump (5) is a diaphragm pump.

8. Leak detection module (1) according to one of the preceding claims, **characterized in that** the signal processing unit (17) is configured to correct the raw output signal of the gas analyser (4) only when the raw output signal of the gas analyser (4) is lower than a gas flow threshold.

9. Method for checking the leaktightness of an object to be tested (A) using tracer gas by means of a leak detection module (1) according to one of the preceding claims, **characterized in that** the raw output signal of the gas analyser (4) is corrected by means of an output signal that is representative of the variations in the intake pressure of the rough-vacuum pump (5).

10. Leaktightness checking method according to the preceding claim, **characterized in that** the output signal that is representative of the variations in the intake pressure of the rough-vacuum pump (5) is the output signal of a pressure sensor (19) interposed between the intake (7) of the turbomolecular vacuum pump (6) and a delivery (11) of the rough-vacuum pump (5).

11. Leaktightness checking method according to Claim 9, **characterized in that** the output signal that is representative of the variations in the intake pressure of the rough-vacuum pump (5) is a current and/or power supply and/or rotational frequency signal of the rough-vacuum pump (5).

12. Leaktightness checking method according to one of Claims 9 to 11, **characterized in that** the raw output signal of the gas analyser (4) is corrected only when the raw output signal of the gas analyser (4) is lower than a gas flow threshold.

13. Leaktightness checking method according to one of Claims 9 to 12, **characterized in that** a maintenance message is generated when the variations in the output signal that is representative of the variations in the intake pressure of the rough-vacuum pump (5) exceed a variation threshold.
